# EUROPEAN PATENT SPECIFICATION

(11) **EP 2 502 500 B1**
(45) Date of publication and mention of the grant of the patent: **21.08.2013**
(21) Application number: 11159732.4
(22) Date of filing: 25.03.2011
(51) Int. Cl.: A23D 9/02, C11B 3/00, C11B 3/02, C11B 3/04, C11B 3/10, C11B 3/14

(54) **Producing refined plant oils from washed crude plant oil**
Herstellung von raffinierten Pflanzenölen aus Rohöl gewaschener Pflanzen
Production d'huiles végétales raffinées à partir d'huile végétale brute lavée

(43) Date of publication of application: 26.09.2012
(73) Proprietor: Nestec S.A., 1800 Vevey (CH)
(72) Inventor: Sandoz, Laurence, 1040, ECHALLENS (CH); Craft, Brian, 1815, Clarens (CH); Destaillats, Frederic, 1077, SERVION (CH); Nagy, Kornél, 1005, LAUSANNE (CH)
(74) Representative: Cogniat, Eric Jean Marie

(56) References cited:
- WO-A1-2011/009843
- US-A1- 2009 211 946

## Description

The present invention generally relates to the field of refined oils. In particular, the present invention relates to refined plant oils substantially free of chlorinated contaminants, such as monochloropropanediol (MCPD), in particular 3-MCPD diesters, and to a process to produce such oils. To achieve this, crude oil is liquid-liquid extracted to remove chlorine donors before it is further refined.

3-Halogen-1,2-propanediols, in particular 3-monochloro-1,2-propanediol (3-MCPD), are known contaminants in foods [Food Addit Contam. 2006, 23, 1290-1298]. A study indicates that 3-MCPD may be carcinogenic to rats if administered at high doses [Evaluation of Certain Food Additives and Contaminants, World Health Organization, Geneva, Switzerland 1993, pp. 267-285; Int J Toxicol. 1998, 17, 47.].

Refined bleached deodorized (RBD) vegetable oils have recently gained much attention due to the newly found existence of two potentially carcinogenic families of compounds called monochloropropanediol (MCPD). 3-MCPD was originally found in acid hydrolyzed vegetable protein (acid-HVP) [Z Lebensm-Unters Forsch. 1978, 167, 241-244]. Recently, it was found that refined edible oils may contain 3-MCPD in its fatty acid ester form, but only very little amounts of free 3-MCPD [Food Addit Contam. 2006, 23, 1290-1298]. Although there are presently no studies available on the toxicity of 3-MCPD-esters, the European Food Safety Authority (EFSA) recommends to treat 3-MCPD esters as free 3-MCPD in terms of toxicity [European Food Safety Authority 2008].

It is postulated that monochloropropanediol (MCPD) may arise from the chlorination of vegetable glycerides at very high temperatures, e.g., during the final step of the oil refining process, or deodorization, under which oils may be heated under vacuum (3-7 mbar) up to 260-270 °C.

Until now, little has been known as to the mechanisms through which this chlorination takes place, or the source of the incoming chlorine 'donor compounds'.

Currently, the presence of 3-MCPD in refined oils is carefully monitored and oils with a 3-MCPD content above a threshold value are discarded in order to ensure full compliance with EFSA recommendations.

As 3-MCPD may occur in many refined commercially important vegetable oils, there is a need in the art for further processes to avoid the production of such contaminants during oil refining.

The present inventors have addressed this need.

Consequently, it was the object of the present invention to provide the art with a method to avoid any generation of 3-monochloro-1,2-propanediol (3-MCPD) esters in oil refinement.

This objective was achieved by a process in accordance with the subject matter of the independent claims. The subject matter of the dependant claims further develops the idea of the present invention.

In particular, the present inventors describe a method through which MCPD esters generation during the process of oil refining can be substantially reduced or prevented completely.

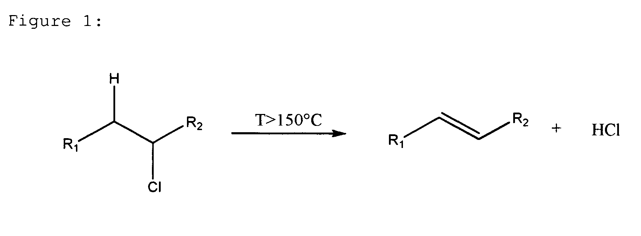

It has been well documented in the scientific literature that dehalogenation reactions can occur during thermal processes. Chlorine has been shown to leave chemical components as hydrogen chloride (gas) upon the input of sufficient activation energy, which is abundant during the deodorization of vegetable oils at high temperatures (up to 270 °C) as provided in Figure 1.

The present inventors believe that hydrogen chloride is evolved during oil refining from chlorine containing compounds inherently present in plant material.

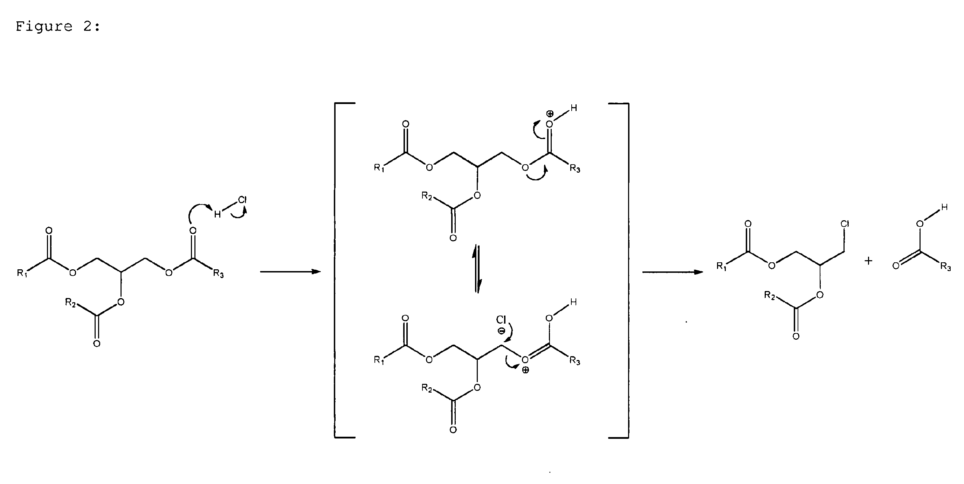

Without wishing to be bound by theory, it is suggested that mechanistically, the MCPD di-esters may be formed during oil refinement via the protonation of the terminal ester group of triacylglycerols (TAG), which represent about 88-95% of total glycerides in most vegetable oils, through interaction with hydrogen chloride evolved during oil refining. The formed oxonium cation can then undergo intramolecular rearrangement, followed by nucleophilic substitution of chloride ion and the release of a free fatty acid and a MCPD di-ester (see Figure 2).

The present inventors were surprised to see that they could significantly reduce or prevent completely the generation of polar chlorinated compounds, such as MCPD esters, and MCPD diesters, for example, by subjecting the crude plant oil to a liquid-liquid extraction with a polar solvent solution non-miscible with the plant oil and discarding the polar solvent phase before refinement.

The inventors were surprised to see that most chlorinated compounds in the plant material are of a polar nature, so that they can be effectively removed from plant material by a liquid-liquid extraction with a polar solvent solution.

Once removed, these potential chlorine donors are no longer available for the generation of polar chlorinated compounds, such as MCPD esters, and MCPD di-esters, during the heating steps in oil refinement.

The inventors were also surprised to see that this liquid-liquid extraction step is the more effective, the earlier it is performed in the process of oil refinement.

Hence, the inventors propose here to liquid-liquid extract the crude oil before it is subjected to further oil refinement steps.

Crude plant oil may be obtained from plant material by using mechanical, semi-chemical or fully chemical methods. Preferred are mechanical methods such as grinding, milling or pressing, for example.

Hence, for example, the plant material may be mashed into a pulp before the crude oil is extracted.

As plant material, whole plants or any parts of plants may be used. Typically plant components are used that are well known for the production of food grade oils.

For example, the plant components may be selected from the group consisting of fruits, seeds or nuts.

For example, the plant component may be selected from the group consisting of palm fruits, soybeans, rapeseeds, canola, sunflower seeds, safflower seeds, coconuts, palm kernels, cottonseeds, peanuts, groundnuts, or combinations thereof.

For example, the plant components may be palm fruits, e.g., fruits of the oil palm *Elaeis guineensis,* for the production of palm oil.

Consequently, a crude plant oil is an unrefined oil fraction expressed from plant material containing at least 20 weight-% lipids, for example at least 50 weight-% lipids or at least 75 weight-% lipids.

Hence, the present invention relates in part to a process to produce a refined plant oil substantially free of chlorinated contaminants , from crude plant oil, wherein the crude plant oil is subjected to a liquid-liquid extraction with a polar solvent solution non-miscible with the plant oil and the polar solvent phase is discarded before refinement.

The chlorinated contaminants may be selected from the group consisting of monochloropropanediols (MCPD), MCPD mono-esters, MCPD di-esters, or combinations thereof.

The acids esterified to monochloropropanediols may be lauric, myristic, palmitic, stearic, oleic, linoleic acids for example.

In the framework of the present invention the crude oil is subjected to a liquid-liquid extraction with a polar solvent solution non-miscible with the plant oil before further refinement steps are carried out.

According to the present invention, the crude plant oil is subjected to a liquid-liquid extraction with a polar solvent solution non-miscible with the plant oil.

"Non-miscible" means that the solvent-oil system will form at least two phases after the system is allowed to set.

Essentially, any polar solvent may be used for the purpose of the present invention. Preferably, the solvent is accepted in the production of food product, for example is food-grade or can be easily removed completely from the oil preparation.

Compounds are considered food grade if they are generally approved for human or animal consumption.

For example, the polar solvent non-miscible with the plant oil may be selected from the group consisting of alcohols, water, or combinations thereof. As alcohols, in particular ethanol, 2-propanol or glycerol may be used.

The crude plant oil may be liquid-liquid extracted with any amount of polar solvent non-miscible with the plant oil. Generally, larger amounts of solvent will generate better results.

In order to generate good results without wasting solvent, the liquid-liquid extraction step may also be repeated. Such a liquid-liquid extraction step may be repeated, e.g., once, twice or three times.

For example, the liquid-liquid extraction step may be carried out with a polar solvent that is added to the crude oil in an amount in the range of about 2:1 to 1:2 (v/v), for example about 1:1 (v/v).

Subjecting the crude plant oil with to a liquid -liquid extraction with a polar solvent non-miscible with the plant oil is sufficient to achieve the object of the present invention.

However, e.g., to obtain a clearer phase separation before the polar phase containing the chlorinated contaminants are removed the crude oil may also be extracted with a mixture of a polar solvent and a non-polar solvent.

For example, the liquid-liquid extraction step may be carried out with a polar solvent solution in combination with a non-polar solvent. The non polar solvent may be, for example, a food-grade oil or hexane. The non-polar solvent and the polar solvent may be used in any ratio, for example in the range of 2:1 to 1:2 (v/v), e.g., in a ratio in the range of 1 to 1 (v/v).

Elevated temperatures in the liquid-liquid extraction step help to ensure an effective transfer of the chlorinated polar compounds into the polar phase in a minimum amount of time.

Low temperatures are in principle possible depending of the melting point of the crude oil, but a longer time for an effective extraction step will be required.

Too high temperatures may have a negative influence on the quality of the resulting oil and may cause unwanted side reactions.

Consequently, in the process of the present invention the liquid-liquid extraction step of the crude oil may be carried out at a slightly elevated temperature.

The crude oil may preheated, for example, via heat exchange from the subsequent refining procedure, which has the advantage to save energy.

The polar solvent solution may then be added to the preheated crude oil.

For example, the liquid-liquid extraction step of the crude oil may be carried out at in the range of about 40 to 80 °C for about 1 to 5 minutes.

Agitation of the mixture will reduce the time required for an effective extraction step. Hence, in one embodiment the plant components may be agitated during the extraction step.

The polar solvent solution should be removed from the process as quickly as possible, as it contains the potential chlorine donor compounds. For example, the polar solvent solution may be removed from the crude oil before the refining starts and/or may be continuously removed from the process.

This separation may be aided by centrifugation, for example.

The process of the present invention may further comprise a neutralization step, a centrifugation step and/or a drying step after the liquid-liquid extraction step.

Refined oils produced from crude oil extracted in accordance with the present invention will comprise less than 1 ppm, preferably less than 0.3 ppm of monochloropropanediol (MCPD), in particular MCPD diesters.

As the chlorine donors are removed from the crude oil, heating during the refinement process will not cause the generation of unwanted chlorinated compounds.

Any plant oil may be used for the purpose of the present invention.

For example, the plant oil may be selected from the group consisting of palm oil, soybean oil, rapeseed oil, canola oil, sunflower oil, safflower oil, coconut oil, palm kernel oil, cottonseed oil, peanut oil, groundnut oil, or combinations thereof.

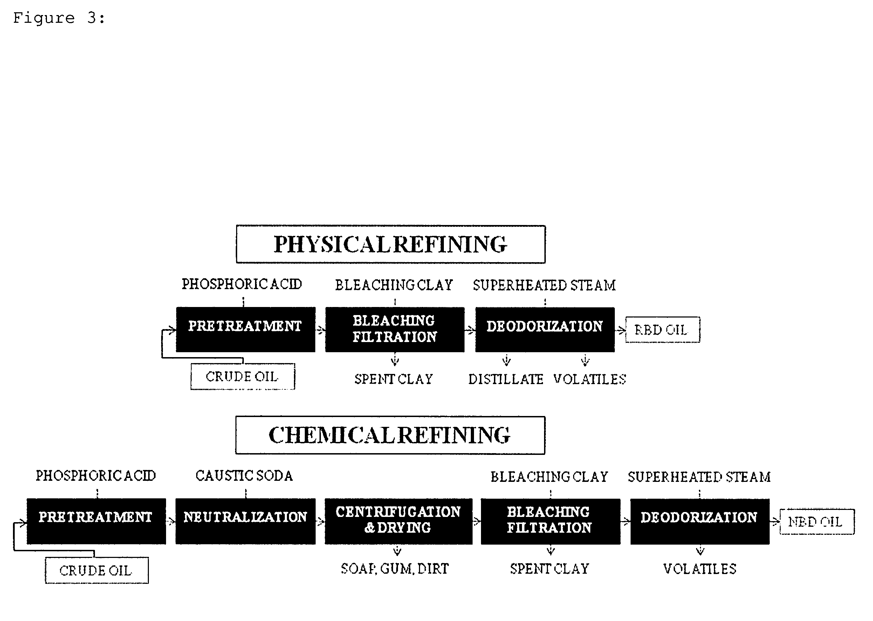

The process was shown to be in particular useful for the production of refined palm oil. A generic description of the process is provided in Figure 3.

Modern plant oil; e.g., vegetable oil; refinement today consists of two predominant methods, chemical and physical refining.

In efforts aimed at increased sustainability, oil refineries have modified their plant oil processing lines in the past few decades for the minimization of energy expenditure (economizers) and the reduction of waste; however, the steps of these two refining processes have essentially remained the same.

Physical refining is essentially an abridged form of chemical refining and was introduced as the preferred method of palm oil refining in 1973. It is unique in that it is a three step continuous operation where the incoming crude oil is pretreated with acid (degumming), cleansed by being passed through adsorptive bleaching clay, and then subjected to steam distillation. This process allows for the subsequent deacidification, deodorization, and decomposition of carotenoids unique to palm oil (i.e. the crude oil is deep red in color, unlike other vegetable oils). Given the lack of neutralization step in physical refining, refined bleached (RB) oil produced from a physical refinery contains nearly the same free fatty acid (FFA) levels as found in the crude oil.

Neutralized bleached (NB) oil from a chemical refinery specifies a limit of 0.15% in the NB oil (0.10 in the RBD/NBD fully refined oils). NB and RB palm oil are very comparable pre-deodorization in every other aspect.

It has been well established that the deodorization step of oil refining (whether chemical or physical), is the step at which MCPD esters are generated. Literature suggests that MCPD generation reactions increase exponentially (> 150 °C) and goes to completion in a short time period.

The heat bleaching unit operation is the main source of loss in the oil refining process resulting in 20-40% reduction in oil volume post filtration. The process lasts about 30-45min and takes place under 27-33mbar vacuum at a temperature of 95-110 °C.

Heat bleached oil is then rerouted in piping to a deaerator that aides in the removal of dissolved gases, as well as moisture, before being sent to the deodorization tower.

The process of the present invention typically comprises a pre-treatment step, followed by a bleaching step and a subsequent deodorization step.

Typically, the pre-treatment step comprises pre-treating the crude oil with an acid, the bleaching step comprises heating the oil and cleaning the oil by passing it through adsorptive bleaching clay, and the deodorization step comprises a steam distillation.

Consequently, in the process of the present invention the refinement may comprise a pre-treatment step, a bleaching step and a deodorization step.

The pre-treatment step may comprise washing the crude oil with an acid, the bleaching step may comprise heating the oil and cleaning the oil by passing it through adsorptive bleaching clay, and the deodorization step may comprise a steam distillation.

The present invention also extends to refined plant oil obtainable by a process in accordance with the present invention.

It is clear for those of skill in the art that they can freely combine features of the process and of the oil described in present invention without departing from the scope of the invention as disclosed.

Further advantages and features of the present invention are apparent from the following figures and example.
Figure 1 shows the generic mechanism of dehydrochlorination of organochlorines that can lead to the formation of hydrochloric acid during oil deodorization (R₁ and R₂ indicate substituents).
Figure 2 shows the mechanism for the formation of 3-MCPD diester from TAG at high temperatures in the presence of trace amounts of hydrochloric acid.
Figure 3 shows an outline of the processes for chemical and physical refining of vegetable oils.
Figure 4 shows the level of MCPD di-esters (palmitoyl-oleoyl-MCPD, dipalmitoyl-MCPD, dioleoyl-MCPD, palmitoyl-linoleyl-MCPD, oleoyl-linoleyl-MCPD) in heat treated crude palm oil, crude palm oil washed with an acidified ethanol-water solution (1:1, v/v, 0.1% formic acid). Values reported are relative to internal standard.

Table 1 provides the liquid chromatographic gradient used for the separation of glycidyl esters, DAG, and TAG via ULC-MS/MS. Solvent A was 1 mM Ammonium-Formate in methanol, while solvent B was 100 µM Ammonium-formate in isopropanol.

Table 2. provides the single reaction monitoring (SRM) parameters of various analytes in the ULC-MS/MS system.

### Example

### 1. Removal of organochlorines from crude palm oil

Crude palm oil (3 mL) samples were washed three times with an acidified ethanol-water (1:1, v/v, 0.1% formic acid, 3 mL) in glass tubes. Homogenization was performed using an automated vortex system at 2500 rpm for 1 min and tubes were centrifuged at 2000 rpm for 2 min. The oil was recovered, pooled and dried.

### 2. Heat treatment of palm oil samples

Washed and intact crude palm oil samples (0.5 mL) were heated under nitrogen in sealed glass ampoules at 235°C for 2h. The heat treatment mimics the thermal condition used for deodorization. After 2h, samples were cooled to room temperature and analyzed by liquid-chromatography tandem mass-spectrometry as described below.

### 3. Analysis of MCPD esters in palm oil by liquid-chromatography tandem mass-spectrometry

A ThermoFisher Accela 1250 system was used to perform ultra high performance liquid chromatography. A silica based octadecyl phase (Waters Acquity HSS C18, 1.7 µm; 2.1×150 mm) was found adequate for the separation of analytes using a buffered methanol-isopropanol gradient; gradient summarized in Table 1. A ThermoFisher TSQ Quantum Access Max mass spectrometer was used for the relative quantification MCPD esters. Electrospray ionization in positive ion mode followed by triple quadrupole-based tandem mass spectrometry was used to detect MCPD esters. Applied transitions for the Selected Reaction Monitoring (SRM) experiments are given in Table 2. For all transitions, a dwell time of 150 ms and span of 0.2 m/z were used.

### 4. Effect of organochlorine removal on formation of MCPD esters

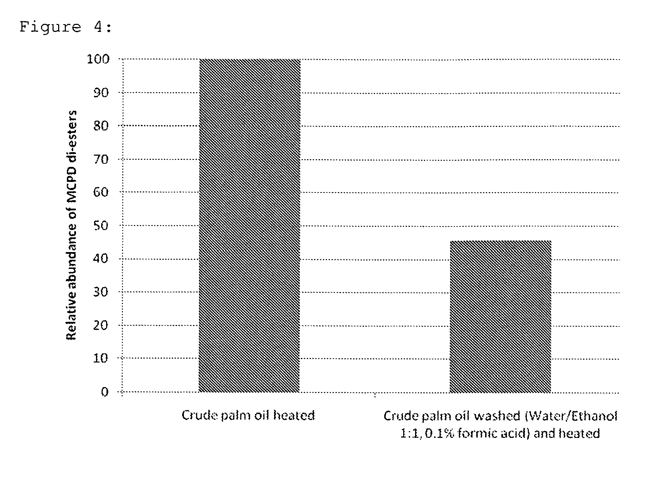

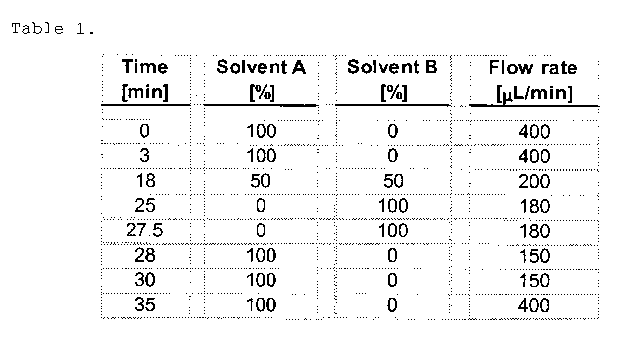

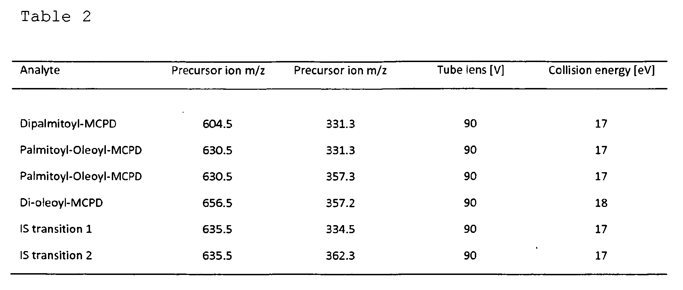

Removal of organochlorines present in crude palm oil limits the liberation of hydrogen chloride during heat treatment of oil and therefore the formation of process contaminants such as MCPD esters. In the present example, an acidified ethanol and water solution (1:1, v/v, 0.1% formic acid) was used to remove organochlorines from crude oil. The washed oil was then subjected to thermal treatment at 235°C for 2h and MCPD esters were measured by LC-MS. Not washed crude palm oil was subjected to the same thermal treatment and used as a control to evaluate the efficiency of the washing step on the formation of MCPD esters. Results provided in Figure 4, show that the washing step applied on the crude oil significantly limits the formation of MCPD esters. This example confirmed that the removal of the organochlorines early in the refining process is key to limit the formation of MCPD esters during the deodorization step.

## Claims

1. Process to produce a refined plant oil substantially free of chlorinated contaminants, from crude plant oil, wherein the crude plant oil is subjected to a liquid-liquid extraction with a polar solvent solution non-miscible with the plant oil and the polar solvent phase is discarded before refinement.

2. Process in accordance with claim 1, wherein the refinement comprises a pre-treatment step, a bleaching step and a deodorization step.

3. Process in accordance with claim 2, wherein the pre-treatment step comprises washing the crude oil with an acid, the bleaching step comprises heating the oil and cleaning the oil by passing it through adsorptive bleaching clay, and the deodorization step comprises a steam distillation.

4. Process in accordance with one of the preceding claims, wherein the liquid-liquid extraction is carried out with a polar solvent solution that is added to the oil in an amount in the range of about 2:1 to 1:2 (v/v), for example about 1:1 (v/v).

5. Process in accordance with one of the preceding claims, wherein the polar solvent is selected from the group consisting of alcohols, water, or combinations thereof.

6. Process in accordance with one of the preceding claims, wherein liquid-liquid extraction is carried out with a polar solvent solution in combination with a non-polar solvent, such as hexane, in a ratio in the range of 1:1 to 1:5 (v/v).

7. Process in accordance with one of the preceding claims, wherein the crude oil is preheated, for example via heat exchange, and wherein the polar solvent solution is added to the preheated crude oil.

8. Process in accordance with one of the preceding claims, wherein the liquid-liquid extraction of the crude oil is carried out at a temperature in the range of about 40 to 80 °C for about 1 to 5 minutes.

9. Process in accordance with one of the preceding claims, wherein polar solvent solution is continuously removed from the process.

10. Process in accordance with one of the preceding claims, further comprising a neutralization step, a centrifugation step and/or a drying step after the liquid-liquid extraction.

11. Process in accordance with one of the preceding claims, wherein the plant oil is selected from the group consisting of palm oil, soybean oil, rapeseed oil, canola oil, sunflower oil, safflower oil, coconut oil, palm kernel oil, cottonseed oil, peanut oil, groundnut oil, or combinations thereof.

12. Process in accordance with one of the preceding claims, wherein the refined plant oil comprises less than 1 ppm, preferably less than 0.3 ppm of monochloropropanediol (MCPD), in particular MCPD diesters.

## Patentansprüche

1. Verfahren zur Herstellung eines raffinierten Pflanzenöls, das im wesentlichen frei von chlorierten Schadstoffen ist, aus rohem Pflanzenöl, wobei das rohe Pflanzenöl einer Flüssig-Flüssig-Extraktion mit einem nicht mit dem Pflanzenöl mischbaren polaren Lösungsmittel unterzogen wird, und die polare Lösungsmittelphase vor der Raffination verworfen wird.

2. Verfahren nach Anspruch 1, wobei die Raffination einen Vorbehandlungsschritt, einen Bleichschritt und einen Desodorierungsschritt aufweist.

3. Verfahren nach Anspruch 2, wobei der Vorbehandlungsschritt das Waschen des Rohöls mit Säure, der Bleichschritt das Erhitzen des Öls und Reinigen des Öls, indem es durch adsorptive Bleicherde geführt wird, und der Desodorierungsschritt eine Dampfdestillation aufweist.

4. Verfahren nach einem der vorhergehenden Ansprüche, wobei die Flüssig-Flüssig-Extraktion mit einem polaren Lösungsmittel durchgeführt wird, das dem Öl in einer Menge zwischen ca. 2:1 bis 1:2 (v/v), beispielsweise ca. 1:1 (v/v), hinzugefügt wird.

5. Verfahren nach einem der vorhergehenden Ansprüche, wobei das polare Lösungsmittel aus der Gruppe ausgewählt ist, die Alkohole, Wasser, oder Kombinationen daraus, aufweist.

6. Verfahren nach einem der vorhergehenden Ansprüche, wobei die Flüssig-Flüssig-Extraktion mit einem polaren Lösungsmittel in Kombination mit einem nicht polaren Lösungsmittel, wie beispielsweise Hexan, in einem Verhältnis von 1:1 bis 1:5 (v/v) durchgeführt wird.

7. Verfahren nach einem der vorhergehenden Ansprüche, wobei das Rohöl vorgewärmt wird, beispielsweise durch Wärmeaustausch, und wobei das polare Lösungsmittel dem vorgewärmten Rohöl hinzugefügt wird.

8. Verfahren nach einem der vorhergehenden Ansprüche, wobei die Flüssig-Flüssig-Extraktion des Rohöls bei einer Temperatur im Bereich von ca. 40 bis 80 °C für 1 bis 5 Minuten durchgeführt wird.

9. Verfahren nach einem der vorhergehenden Ansprüche, wobei das polare Lösungsmittel kontinuierlich aus dem Verfahren abgeschieden wird.

10. Verfahren nach einem der vorhergehenden Ansprüche, das weiterhin einen Neutralisierungsschritt, einen Zentrifugationsschritt und/oder einen Trocknungsschritt nach der Flüssig-Flüssig-Extraktion aufweist.

11. Verfahren nach einem der vorhergehenden Ansprüche, wobei das Pflanzenöl aus der Gruppe ausgewählt ist, die Palmöl, Sojabohnenöl, Rüböl, Rapsöl, Sonnenblumenöl, Safloröl, Kokosnussöl, Palmkernöl, Baumwollsaatöl, Erdnussöl, oder Kombinationen daraus, aufweist.

12. Verfahren nach einem der vorhergehenden Ansprüche, wobei das raffinierte Pflanzenöl weniger als 1 ppm, vorzugsweise weniger als 0,3 ppm, Monochlorpropandiol (MCPD), insbesondere 3-MCPD Diester, aufweist.

## Revendications

1. Procédé de production d'une huile végétale raffinée sensiblement exempt de contaminants chlorés, à partir d'une huile végétale brute, dans lequel l'huile végétale brute est soumise à une extraction liquide-liquide avec une solution de solvant polaire non miscible avec l'huile végétale et la phase de solvant polaire est éliminée avant le raffinage.

2. Procédé selon la revendication 1, dans lequel le raffinage comprend une étape de prétraitement, une étape de blanchiment et une étape désodorisation.

3. Procédé selon la revendication 2, dans lequel l'étape de prétraitement comprend le lavage de l'huile brute avec un acide, l'étape de blanchiment comprend le chauffage de l'huile et le nettoyage de l'huile en la passant au travers d'un argile blanchissant et absorbant, et l'étape de désodorisation comprend une distillation à la vapeur.

4. Procédé selon l'une des revendications précédentes, dans lequel l'extraction liquide-liquide est effectuée avec une solution de solvant polaire, qui est ajoutée à l'huile dans une quantité comprise dans la plage allant d'environ 2 :1 à 1 :2 (v/v), par exemple environ 1 :1 (v/v).

5. Procédé selon l'une des revendications précédentes, dans lequel le solvant polaire est sélectionné dans le groupe constitué d'alcools, d'eau, et de combinaisons de ces derniers.

6. Procédé selon l'une des revendications précédentes, dans lequel l'extraction liquide-liquide est effectuée avec une solution de solvant polaire en combinaison avec un solvant non polaire, tel l'hexane, dans un rapport de l'ordre de 1 :1 à 1 :5 (v/v).

7. Procédé selon l'une des revendications précédentes, dans lequel l'huile brute est préchauffée, par exemple par l'intermédiaire d'échange de chaleur, et dans lequel la solution de solvant polaire est ajoutée à l'huile brute préchauffée.

8. Procédé selon l'une des revendications précédentes, dans lequel l'extraction liquide-liquide de l'huile brute est effectuée à une température comprise dans la plage allant d'environ 40°C à 80°C pendant environ 1 à 5 minutes.

9. Procédé selon l'une des revendications précédentes, dans lequel la solution de solvant polaire est continuellement enlevée du procédé.

10. Procédé selon l'une des revendications précédentes, comprenant en outre une étape de neutralisation, une étape de centrifugation et/ou une étape de séchage après l'extraction liquide-liquide.

11. Procédé selon l'une des revendications précédentes, dans lequel l'huile végétale est sélectionnée dans le groupe constitué d'huile de palme, d'huile de soja, d'huile de colza, d'huile de canola, d'huile de tournesol, d'huile de carthame, d'huile de noix de coco, d'huile de palmiste, d'huile de coton, d'huile de cacahuète, d'huile d'arachide, ou de combinaisons de ces dernières.

12. Procédé selon l'une des revendications précédentes, dans lequel l'huile végétale raffinée comprend moins d'un ppm, de préférence moins de 0.3 ppm de monochloropropanediol (MCPD), en particulier de diesters de MCPD.
